# EUROPÄISCHE PATENTSCHRIFT

(11) **EP 2 834 118 B1**
(45) Veröffentlichungstag und Bekanntmachung des Hinweises auf die Patenterteilung: **02.11.2016**
(21) Anmeldenummer: 13717198.9
(22) Anmeldetag: 28.03.2013
(51) Int. Cl.: F16K 15/14, B60T 17/02

(54) **ELEKTROMOTORISCH ANGETRIEBENES PUMPENAGGREGAT**
PUMP UNIT DRIVEN BY AN ELECTRIC MOTOR
GROUPE DE POMPAGE ENTRAÎNÉ PAR UN MOTEUR ÉLECTRIQUE

(30) Priorität: 03.04.2012 DE 102012205492
(43) Veröffentlichungstag der Anmeldung: 11.02.2015
(73) Patentinhaber: Continental Teves AG & Co. OHG, 60488 Frankfurt (DE)
(72) Erfinder: PETZOLD, Falk, 60489 Frankfurt (DE)
(86) Internationale Anmeldenummer: PCT/EP2013/056713
(87) Internationale Veröffentlichungsnummer: WO 2013/149939

(56) Entgegenhaltungen:
- DE-A1- 19 629 176
- DE-A1-102011 082 749

## Beschreibung

Elektromotorisch angetriebenes Pumpenaggregat zur Bereitstellung von Unterdruck für einen pneumatischen Bremskraftverstärker einer Kraftfahrzeugbremsanlage, mit den Merkmalen nach dem Oberbegriff des Anspruchs 1.

### Stand der Technik:

Bei Kraftfahrzeugen mit pneumatisch verstärkten hydraulischen Bremsanlagen kann, insbesondere bei einem Einsatz von Diesel-, turbogeladenen, hybriden oder elektrischen Antrieben und bei gleichzeitig gesteigerten Anforderungen an eine Verfügbarkeit von Bremskraft, eine notwendige Unterdruckversorgung des pneumatischen Bremskraftverstärkers nur unzureichend oder gar nicht durch den Hauptantrieb des Kraftfahrzeugs gewährleistet werden. In solchen Fällen ist es bekannt, gesonderte elektromotorisch angetriebene Pumpenaggregate zur einen unterstützenden oder alleinigen ausschließlichen Unterdruckversorgung des Bremskraftverstärkers bereitzustellen.

Ein derartiges Pumpenaggregat ist beispielsweise aus EP1984221B1 bekannt.

Gleichzeitig besteht ein regelmäßiger Wunsch, Bauraum für Versorgungsaggregate eines Kraftfahrzeugs sowie deren Gewicht einzusparen. Die Verwendung eines gesonderten Pumpenaggregates, welcher für sich selbst sowie die erforderlichen elektrischen und Unterdruckleitungen und Anschlüsse einen zusätzlichen Bauraum und Gewicht beansprucht führt diesbezüglich zu einem Zielkonflikt. Zudem verursacht ein erforderlicher Aufwand bei der Herstellung und Montage eines derartigen Aggregats zusätzliche unerwünschte Kosten.

### Aufgabe:

Der Erfindung liegt daher die Aufgabe zu Grunde, ein kostengünstiges und besonders kompaktes Pumpenaggregat anzubieten, welches unter Erfüllung gestellter Anforderungen die Nachteile aus dem Stand der Technik vermeidet und insbesondere verbesserte Herstell- und Montierbarkeit bei einem reduzierten Gewicht aufweist.

### Lösung:

Die Aufgabe wird zusammen mit der Merkmalskombination nach dem Anspruch 1 gelöst.

Ein- und Auslassventile können vorteilhafterweise an einem einzigen Elastoelement derart ausgebildet werden, so dass durch eine Kombination der Funktionselemente eine besonders kompakte und einfache integrierte Einlass-Auslass-Funktionsbaugruppe in Form eines Ventilmoduls realisierbar wird. Hierdurch ist eine ortsnahe, konzentrierte sowie eine einfach und flexibel anpassbare Anordnung von Anschlüssen für Unterdruckleitungen ermöglicht, die Konstruktion des Pumpengehäuses kann vereinfacht und um interne Luft- und Unterdruckkanäle reduziert werden.

Vorzugsweise kann das Elastoelement als ein kombiniertes Ventilplättchen ausgeführt sein, wobei es mindestens zwei Flächenbereiche aufweist, von denen das eine Flächenbereich zur Ausführung der Einlassfunktion und ein anderer Flächenbereich zur Ausführung der Auslassfunktion vorgesehen ist. Das Elastoelement kann hierfür vorzugsweise aus einem Gummi- Silikon- oder vergleichbarem elastomeren Werkstoff jedoch auch als Metallplättchen hergestellt werden.

Dadurch kann mit Vorteil eine kompakte integrierte Baugruppe geschaffen und als ein Ventilmodul ausgebildet werden, welches neben dem Elastoelement einen Einlasskanal, einen Auslasskanal, und wenigstens ein Schaldämpfungselement an einem Modulgehäuse angeordnet, umfasst. Hierbei kann das Schaldämpfungselement unmittelbar dem Auslasskanal zugeordnet werden und dadurch bei gleichzeitiger Materialeinsparung besonders effizient wirken.

Das Ventilmodul kann als eine gesonderte Baueinheit hergestellt und vormontiert werden. Im Rahmen einer Endmontage einer Pumpe ermöglicht dies eine modularisierte Montage, indem eine Einzelteilzuführung, also logistischer Aufwand im Rahmen der Pumpenmontage reduziert ist.

Der Auslasskanal ist dabei vom Innenraum des Pumpengehäuses pneumatisch getrennt und es kann auf gesonderte, aufwändige Kanalführung, Verbindungskanäle, Bauteile und Dichtelemente verzichtet werden.

In einer besonders vorteilhaften Weise können die Ein- bzw. Auslasskanäle und somit auch deren Schnittstellen am Ventilmodul relativ zum Arbeitsraum im Wesentlichen übereinander angeordnet sein.

Besonders effektiv ist ein solcher Aufbau, wenn das Ventilmodul ein weitgehend zylindrisch-rohr- oder -topfförmiges Ventilmodulgehäuse aufweist, was einen besonders raumeffizienten turmartigen Aufbau des Ventilmoduls entgegenkommt. Jedoch kann das Ventilmodulgehäuse innerhalb der Erfindung genauso mit einem eckigen Querschnittprofil ausgeführt werden - beispielsweise quadratisch oder beliebig vieleckig.

Das Modulgehäuse kann dabei luftdicht an einem Arbeitsraumdeckel angebracht, einstückig mit diesem ausgebildet oder als ein integrales Konstruktionselement von dem Arbeitsraumdeckel gestaltet sein.

Mit Vorteil wird ein kompakter Aufbau des Ventilmoduls dadurch unterstützt, dass ein kombinierter Ventileinsatz vorgesehen sein kann, der vorteilhafterweise derart gestaltet ist, dass er sowohl eine Sperrwirkung des Elastoelements in die Auslassrichtung im Bereich des Einlasskanals als auch eine Sperrwirkung des Elastoelements in die Einlassrichtung im Bereich des Auslasskanals ermöglicht. Somit vereint ein solcher Ventileinsatz integrativ-konstruktiv die Einlass- und die Auslassfunktion.

Hierbei ist der Ventileinsatz an seiner, zum Elastoelement hin gerichteten, Körperseite in zwei funktionell dem Einlass-, bzw. dem Auslasskanal zugeordnete Flächenbereiche aufgeteilt. Die Flächenbereiche von Einlassseite und Auslassseite sind über dem Elastoelement unmittelbar voneinander abdichtend pneumatisch getrennt. Die Abdichtung erfolgt hierbei bevorzugt über eine Verpressung des Elastoelements zwischen dem Modulgehäuse und der vorgenannten Körperseite des Ventileinsatzes. Auf seiner Einlassseite verfügt der Ventileinsatz über Durchbrüche zum Einlasskanal und die Auslassseite ist weitgehend als eine zum Auslasskanal hin öffnend zylindrisch verrundete Fläche ausgebildet.

Wenn das Elastoelement auf der Einlassseite elastisch gegen den Ventileinsatz in Richtung Arbeitsraum und auf der Auslassseite in die Gegenrichtung zum Ventileinsatz hin ausgelenkt wird, erlaubt eine derartige wechselseitigen Arbeitsweise des Elastoelements neben einer besonders kompakten raumgünstigen Bauform des Ventilmoduls auch einen günstigen Strömungsverlauf des Mediums mit vergleichbar wenig Druckverlust. Dabei erfolgt die Ventilation automatisch auf Grundlage einer pneumatischen Druckdifferenz.

In einer besonders vorteilhaften Weise kann der Ventileinsatz eine Schnittstelle zum Einlasskanal aufweisen.

Es ist ferner möglich, den Ventileinsatz als Formelement integriert in dem Ventilmodulgehäuse vorzusehen, wodurch beispielsweise eine effiziente Herstellung in Kunststoffbauweise realisier werden kann..

Das Ventilmodul kann mit einem Moduldeckel komplettiert werden, welcher mit dem Modulgehäuse, dem Arbeitsraumdeckel oder einem anderen Element verbindbar gestaltet sein kann. Der Moduldeckel kann innerhalb der Erfindung in unterschiedlichen Ausgestaltungen einen Anschluss für den Einlasskanal, eine Mündung des Auslasskanals oder deren Kombination aufweisen oder als ein strukturelles Element des Ventilmoduls eingesetzt sein.

Das Modulgehäuse kann an seiner Unterseite dediziert dem Einlass- und dem Auslasskanal zugeordnete und in den Arbeitsraum zu mündende Durchbrüche aufweisen. Durch einen ventilmodulinternen Aufbau der gesamten Ventilkonstruktion vereinfacht sich der Montageaufwand des Pumpenaggregats erheblich.

Hierbei sind unterschiedliche Reihenfolgen und Positionierungen der einzelnen Arbeitsmediumkanäle und des Schalldämpfungselements realisierbar, ohne die Erfindung zu verlassen.

Beispielsweise kann der Einlasskanal im Ventilmodul relativ zum Auslasskanal weitgehend unten angeordnet sein und über einen radialen Anschluss verfügen, wobei der Auslasskanal dabei über einen oben axial angeordneten Auslass verfügt und das Schalldämpfungsmittel als ein axialer Einsatz im Auslasskanal oberhalb des Einlasskanals vorgesehen ist.

Ebenso ist eine Ausführungsform möglich, bei welcher der Einlasskanal über einen obenliegenden axial angeordneten Anschluss verfügt, der Auslasskanal radial unten am Modulgehäuse in die Modulgehäuse-Umgebung mündet und das Schaldämpfungselement ebenso radial vor- oder in der/den Mündungsöffnung/en des Auslasskanals oder ringförmig um das Modulgehäuse angeordnet vorgesehen ist. Auch weitere relative Anordnungen einzelner Elemente am Ventilmodul sind innerhalb der Erfindung denkbar.

Vorteilhafterweise kann das Schalldämpfungselement durch geeignete Werkstoffwahl (beispielsweise PU/PE-Schäume) eine Filterfunktion mit übernehmen, und somit eine zusätzliche Barriere gegen Eindringen von unerwünschten Substanzen aus der Umgebung des Aggregats darstellen.

Eine solche vorstehend beschriebene integrierte Modulkonstruktion erlaubt unter Einhaltung erforderlicher Ansaugleistungs- und Geräuschpegelwerte die Bauteilanzahl zu reduzieren sowie den Aufbau und Herstellbarkeit des Pumpenaggregats insgesamt erheblich zu vereinfachen. Beispielsweise kann auf eine gesonderte Luftauslasseinheit und auf in ein Pumpengehäuse integrierte Luftkanäle verzichtet, die Anzahl von Dichtungselementen verringert und deren Gestaltung vereinfacht werden.

Das Ventilmodul kann dabei in seiner konstruktiven Ausgestaltung, Außenform und Schnittstellen weitgehend unabhängig vom restlichen Pumpenaufbau gestaltet und weitgehend frei positionier werden, beispielsweise platzsparend und herstellgünstig zentral am Arbeitsraumdeckel. Es können auch mehrere Ventilmodule an einem Arbeitsraumdeckel angebracht oder mit diesem integriert vorgesehen sein.

Ebenso kann in weiteren erfindungsgemäßen Ausführungen das Ventilmodul von dem restlichen Pumpenaggregat räumlich gelöst vorgesehen sein und durch Leitungen mit dem Arbeitsraum verbunden. So könnte das Ventilmodul beispielsweise an einer von dem Pumpengehäuse entfernten Stelle angeordnet werden, wodurch eine effiziente Nutzung des vorhandenen Bauraums ermöglicht wird.

Zudem kann das Arbeitsraumdeckel besonders einfach einteilig oder gar an einem Ventilmodulgehäuse integriert ausgeführt sein. Vorteilhafterweise lässt sich dadurch die Anzahl von Schnittstellen, erforderlichen Dicht- sowie Verbindungselementen signifikant reduzieren und der Montageaufwand vereinfachen.

Weil die Abluft aus dem Arbeitsraum lediglich durch ein kleines Schalldämpferelement weitgehend direkt in die Umgebung abgelassen wird, kann auf eine gesonderte komplexe Luftauslasseinheit und zugeordnete Luftkanäle verzichtet, der Materialeinsatz und Platzbedarf insgesamt verringert werden.

Ein besonders einfacher und zuverlässiger Schutz gegen Eintritt von Verunreinigungen aus einer Umgebungsatmosphäre wird durch das bereits vorhandene Auslassventil gewährleistet und von diesem als Zusatzfunktion mit übernommen. Die Zirkulation des Arbeitsmediums bleibt auf die wasserunempfindliche Arbeitskammer beschränkt und eine Kontaminationsgefahr eines Antriebes der Verdrängerelemente automatisch verhindert. Das Wasser würde im Pumpenbetrieb zudem innerhalb kürzester Zeit wieder durch das Auslassventil aus der Arbeitskammer ausgestoßen werden.

Weil keine Abluft durch den Innenraum des Pumpengehäuses geleitet wird, werden insgesamt keine weiteren gesonderten Schutzmittel benötigt. Zudem kann das Schalldämpfungselement durch geeignete Werkstoffwahl eine zusätzliche Filterfunktion erfüllen.

### Figurenbeschreibung:

Weitere Einzelheiten, Merkmale, Vorteile und
Anwendungsmöglichkeiten der Erfindung gehen aus Unteransprüchen zusammen mit der Beschreibung anhand der Zeichnungen hervor. Übereinstimmende Komponenten und Konstruktionselemente werden nach Möglichkeit mit gleichen Bezugszeichen versehen. Nachstehend zeigt:

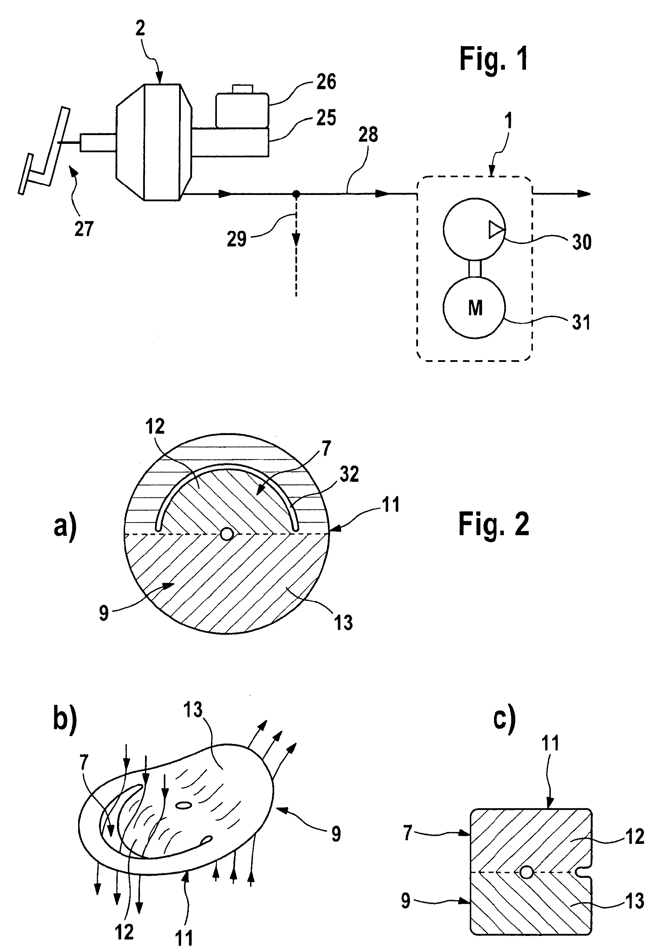

Fig.1 Eine stark vereinfachte Prinzipskizze einer Unterdruckversorgung eines pneumatischen Bremskraftverstärkers.
Fig.2 Eine Skizze zwei verschiedener Elastoelemente eines erfindungsgemäßen Pumpenaggregats in Draufsicht (a,c) und in räumlicher Ansicht (b) zur Darstellung der Wirkungsweise.
Fig.3 Eine Prinzipdarstellung der Wirkungsweise von verschiedenen Ausführungsformen eines erfindungsgemäßen Pumpenaggregats jeweils in einer Einlass-(a,c) und einer Auslass-Stellung (b,d).
Fig.4. Vereinfachte Skizze einer Ausführungsform eines Ventilmoduls in Schnittdarstellung.
Fig.5 Skizze eines Gehäuses des Ventilmoduls in Draufsicht (a) und Seitenansicht in Schnittdarstellung (b).
Fig. 6 Skizze eines Ventileinsatzes in Seitenansicht in Schnittdarstellung (a,b) und Draufsicht (c).
Fig. 7 Ansicht eines Arbeitsraumdeckels mit einem Ventilmodul einer Ausführungsform des erfindungsgemäßen Pumpenaggregats.
Fig. 8 Prinzipskizzen von zwei unterschiedlichen Konzepten einer Verteilung von Einlass-Leitungen mit einem gehäuseinternen Kanal (a) und einer externen Anbindung (b).
Fig. 9 Eine weitere erfindungsgemäße Ausführungsform mit räumlich aufgelöst angeordneten Ventilmodulen.

### Fig.1

Ein Pumpenaggregat 1, welches im Wesentlichen eine Pumpe 30 und einen elektrischen Pumpenantriebsaggregat 31 umfasst, ist über eine Unterdruckleitung 28 mit einem pneumatischen Bremskraftverstärker 2 verbunden. Dabei verbindet die Unterdruckleitung 28 eine nicht gezeigte Unterdruckammer des Bremskraftverstärkers 2 mit einem nicht auf dem Bild gezeigten Einlasskanal 8 des Pumpenaggregats 1 pneumatisch miteinander, so dass die Luft aus der Unterdruckkammer durch das Pumpenaggregat 1 evakuiert werden kann. Zusätzlich kann der Bremskraftverstärker 2 an eine weitere Unterdruckleitung 29 angebunden werden, welche beispielsweise an ein Saugrohr eines Verbrennungsmotors pneumatisch anschließt und ebenfalls zum Evakuieren der Luft aus dem Bremskraftverstärker 2 dient. In der gezeigten Skizze ist ein Hauptbremszylinder 25 an dem Bremskraftverstärker 2 angeordnet, ein Druckmittelbehälter 26 ist hydraulisch mit dem Hauptbremszylinder 25 verbunden, dabei ist es unerheblich, ob der Druckmittelbehälter 26 wie abgebildet direkt oder über eine remote-Leitung mit dem Hauptbremszylinder 25 verbunden ist. Der Bremskraftverstärker 2 ist durch eine als ein Bremspedal ausgebildete Betätigungsvorrichtung 27 betätigt, jedoch sind innerhalb der Erdfindung genauso eine beliebige weitere manuell, durch eine Fremdkraft- oder kombiniert angesteuerte Betätigungsvorrichtung für den Bremskraftverstärker 2 vorstellbar.

### Fig.2

Die Ein- und Auslassventile (7,9) des Pumpenaggregats 1 sind als Plättchenventile an einem einzelnen einstückigen Elastoelement 11 ausgebildet. Hierfür ist das Elastoelement als ein elastisches rundes Ventilplättchen gestaltet und weist einen Flächenbereich 13 auf, welcher annähernd eine Hälfte des Elastoelements 11 einnimmt und dem Auslassventil zugeordnet ist.

Die andere Hälfte des Elastoelements verfügt über einen halbrunden Schlitz 32, welcher einen weiteren, radial innen angeordneten Flächenbereich 12 des Elastoelements 11 begrenzt. Dieser Flächenbereich 12 ist dem Einlassventil 7 zugeordnet.

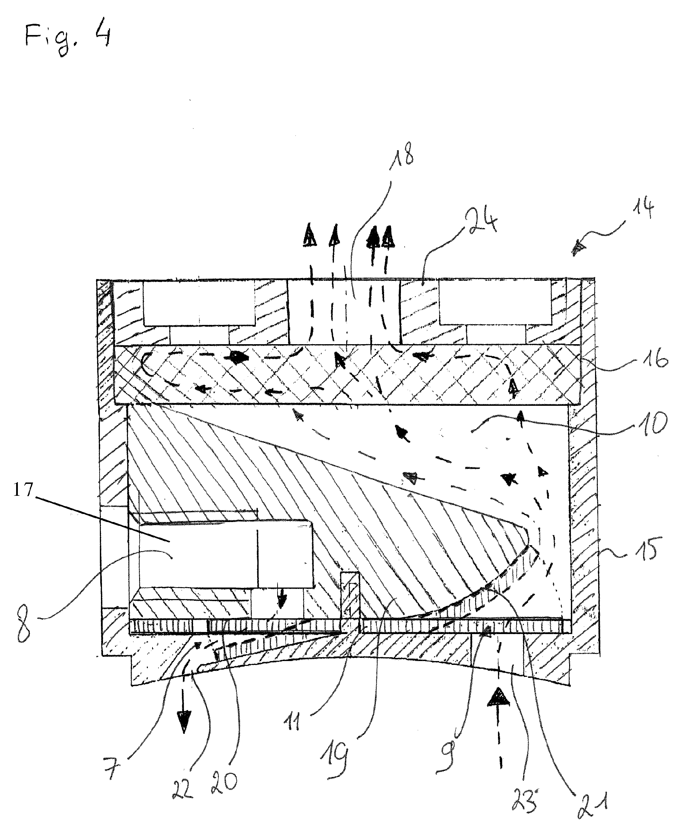

Ein kleiner Durchbruch in der Mitte des Elastoelements 11 erleichtert seine Positionierung und Zentrierung bei der Montage, indem es auf einen mittig positionierten Stift in dem Ventilgehäuse 15 aufgesetzt wird, wie insbesondere aus der Fig.4 zu entnehmen sei.

In weiteren erfindungsgemäßen Ausführungsbeispielen ist es jedoch genauso möglich, weitere Konturen für den Schlitz 32 vorzusehen oder auf einen Schlitz gänzlich zu verzichten. Beispielsweise zeigt die Ansicht c)ein weiteres Ausführungsbeispiel, bei dem ein äußerer Flächenbereich 13 des Elastoelement 11 dem Auslassventil 9 und ein dem Flächenbereich 13 gegenüberliegender äußerer Flächenbereich 12 dem Einlassventil 7 zugeordnet sind.

Das Elastoelement 11 ist in dem abgebildeten Ausführungsbeispiel als ein elastischen Plättchen mit einer kreisrunden Außenkontur gestaltet, jedoch ist es möglich auch weitere Außenkonturen vorzusehen sowie zusätzliche Durchbrüche oder Öffnungen in dem Plättchen, um beispielsweise eine formschlüssige Positionierung oder eine Verdrehsicherung des Elastoelements 11 in einem Ventilmodulgehäuse zu realisierten. Ferner ist es innerhalb der Erfindung möglich, das Elastoelement 11 sowohl aus einem geeigneten elastisch federnden Gummi- oder Kunststoffwerkstoff als auch aus einem Metallwerkstoff auszuführen.

In der Ansicht b) ist das Elastoelement 11 aus der Ansicht a) in einem Zustand abgebildet, bei dem Sowohl der Einlassventil 7 als auch der Auslassventil 9 in einem ausgelenkten, geöffneten Betätigungszustand gezeigt sind. Es versteht sich, dass die Darstellung lediglich einer Verdeutlichung der Funktionsweise der Ventile dient, da in einem tatsächlichen ordnungsgemäßen Betrieb eines Pumpenaggregats 1 ein derartiger Zustand nicht möglich ist und die Ventile 7,9 im Wesentlichen entweder gleichzeitig geschlossen oder abwechselnd einzeln geöffnet sind.

Durch eine Druckdifferenz auf beiden Seiten des Elastoelements werden die Flächenbereiche 12,13 jeweils in Richtung relativen Unterdrucks ausgelenkt, die Ventile 7,9 damit geöffnet, so dass die Luft durch die geöffneten Ventile strömen kann - im Bild verdeutlicht durch die Pfeillinien.

### Fig.3

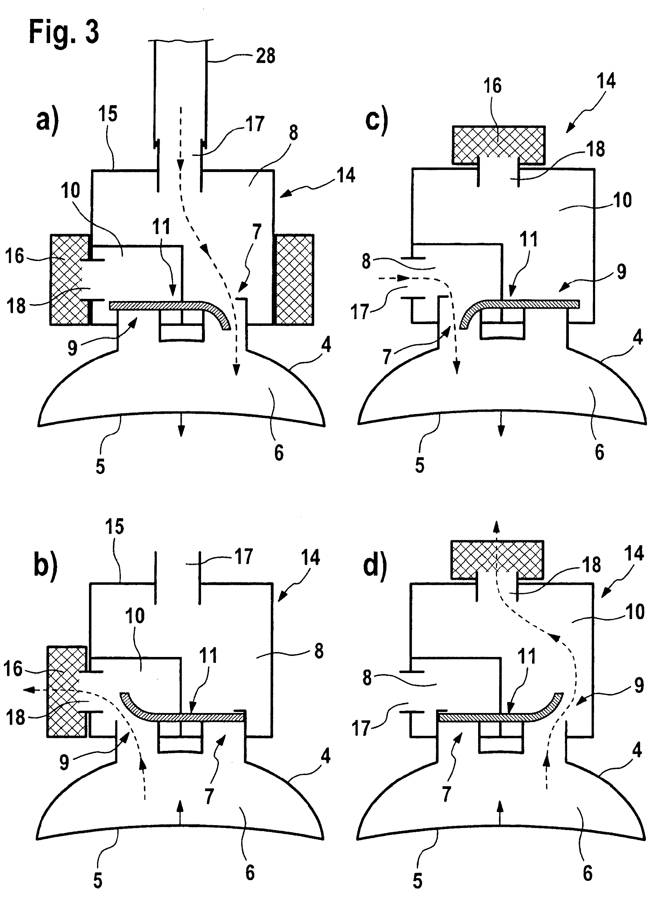

Die Fig.3 verdeutlicht in einer stark vereinfachten Darstellung die Wirkungsweise von mehreren erfindungsgemäßen Ausführungsformen eines erfindungsgemäßen Pumpenaggregats 1. Dabei ist in jeder Ansicht a-c jeweils nur eine Arbeitskammer des Pumpenaggregats 1 dargestellt und auf eine Darstellung eines Verdrängerelements 5 wurde verzichtet. Innerhalb der Erfindung sind jedoch Pumpenaggregate mit einer, zwei oder mehr Arbeitskammern sowie unterschiedlichen Antriebsvorrichtungen für das Verdrängerelement 5 gleichwertig zulässig.

Aus der Ansicht a ist zu entnehmen, dass das Pumpenaggregat 1 ein elastisches und vorzugsweise elastomeres Verdrängerelement 5 aufweist, welches zusammen mit einem Arbeitsraumdeckel 4 einen Arbeitsraum 6 begrenzt. Ein Ventilmodul 14 ist an dem Arbeitsraumdeckel 4 angeordnet und ist pneumatisch an den Arbeitsraum 6 angeschlossen. Das Ventilmodul 14 verfügt über ein Ventilmodulgehäuse 15 und weist innerhalb des Ventilmodulgehäuses 15 das Elastoelement 11, welches ein Einlassventil 7 und ein Auslassventil 9 beinhaltet. Ferner ist in dem Ventilmodulgehäuse 15 ein Einlasskanal 8 angeordnet, welcher von einem Zugang 17 zum Einlassventil 7 führt sowie ein Auslasskanal 10, welcher von dem Auslassventil 9 zu einem Ausgang 18 leitet.

Der Einlasskanal 8 und der Auslasskanal 9 sind in dem Ventilmodulgehäuse 15 weitgehend übereinander gestaffelt angeordnet, so dass das Ventilmodul 14 einen turmartigen Aufbau aufweist mit dem einen Einlasskanal 10 in dem unteren Level nahe der Arbeitskammer 6 und dem Auslasskanal 8 im oberen Level im Wesentlichen oberhalb des Einlasskanals10 angeordnet. In weiteren erfindungsgemäßen Ausführungsformen können die beiden Kanäle selbstverständlich in der umgekehrten Reihenfolge gestaffelt angeordnet sein wie beispielsweise aus den Ansichten c und d zu entnehmen ist.

Der axial ausgerichtete und an dem Ventilmodul 14 angeordneter Zugang 17 stellt eine pneumatische Verbindung zwischen dem Einlasskanal 8 und der Umgebung und dient dem Anschluss einer Unterdruckleitung 28 an das Ventilmodul 14. kann beispielsweise als ein Stutzen gestaltet sein oder mit einer rastbaren Anschlussvorrichtung als ein Quickfitting, ein Bajonettverschluss oder vergleichbar, ausgeführt werden.

Der radial ausgerichtete Ausgang 18 dient der pneumatischen Anbindung des Auslasskanals 10 an die Umgebungsathmosphäre und ist von dieser durch ein Schalldämpfungselement 16 abgeschottet.

Das Schalldämpfungselement 16 ist in dem gezeigten Ausführungsbeispiel als ein Ring aus einem luftdurchlässigen Schaumstoffwerkstoff ausgebildet, umfasst das gesamte Ventilmodulgehäuse 15 radial außen und schirmt dabei den Ausgangs 18 von der Umgebungsathmosphäre ab. Der Luftstrom wird bei seinem Austritt aus dem Auslasskanal 10 durch den Ausgang 18 in das Schaldämpfungselement 16 eingeleitet, wo er sich verteilt und seine Schallenergie im Wesentlichen an den Schaumstoffwerkstoff abgibt. Zudem verhindert der Schaumstoffwerkstoff des Schalldämpfungselements 16 das Eindringen von Schmutz und Feuchtigkeit in das Ventilmodul 14.

Durch das nicht gezeigte elektrische Pumpenantriebsaggregat 31 angetrieben bewegt beziehungsweise verformt sich das Verdrängerelement 5 elastisch abwechselnd in Richtung Arbeitsraumdeckel 4 (wobei das Volumen der Arbeitskammer 6 sich dabei verkleinert) sowie in die Gegenrichtung (wobei das Volumen der Arbeitskammer 6 sich dabei vergrößert). Bei einer Bewegung des Verdrängerelements 6 nach unten und Vergrößerung der Arbeitskammer 6 entsteht auf beiden Seiten der Ventile 7,8 eine Druckdifferenz, wobei in der in der Arbeitskammer 6 ein relativer Unterdruck entsteht. Während das Auslassventil 9 gegen seiner Auslenkung beziehungsweise Öffnung in Richtung Arbeitskammer 6 abgestützt ist, öffnet das Einlassventil 7 und die Luft wird durch den Zugang 17, den Einlasskanal 8 und das Einlassventil 7 aus der Unterdruckleitung 28 in die Arbeitskammer 6 eingesaugt, damit der nicht gezeigte Bremskraftverstärker 2 evakuiert.

In der Ansicht b bewegt sich das Verdrängerelement 5 im Unterschied zur Ansicht a in Richtung Arbeitsraumdeckel 4, so dass in dem Arbeitsraum 6 ein relativer Überdruck entsteht. Nun befindet sich das Einlassventil 7 in seiner unbetätigten Ausgangsstellung, ist dabei abgestützt und geschlossen. Dagegen öffnet das Auslassventil 9 in Richtung Auslasskanal 10 und die Luft strömt aus der Arbeitskammer 6 durch den Ausgang18 in das Schalldämpfungselement 16 und weiter in die Umgebungsathmosphäre.

Das Schalldämpfungselement 16 ist hier lediglich als ein Aufsatzelement, beispielsweise eine Kappe, an dem Ausgang 18 angeordnet und umfasst nicht das Ventilmodulgehäuse an seinem gesamten Umfang wie in der Ausführung nach Ansicht a.

Die Ausführungsformen in den Ansichten c und d weisen im Unterschied zu den Ausführungen nach den Ansichten a und b einen oberhalb des Einlasskanals 8 angeordneten Auslasskanal 10, so dass nun der Zugang 17 radial und der Ausgang 18 axial ausgerichtet an dem Ventilmodul 14 angeordnet sind. Es ist jedoch innerhalb der Erfindung ebenso möglich, sowohl den Zugang 17 als auch den Ausgang 18 radial ausgerichtet anzuordnen - übereinander gestaffelt oder winkelversetzt.

Genauso wie in den vorstehend beschriebenen Ausführungen kann der Zugang 17 als ein Stutzen gestaltet sein oder mit einer rastbaren Anschlussvorrichtung als ein Quickfitting, ein Bajonettverschluss oder vergleichbar, ausgeführt werden.

In der Ansicht c bewegt sich das Verdrängerelement 5 nach unten, die Arbeitskammer 6 vergrößert sich, das Einlassventil 7 ist geöffnet, die Luft strömt durch den Zugang 17 und den Einlasskanal 8 in die Arbeitskammer 6.

Ganz im Gegensatz dazu verlaufen die Abläufe in der Ansicht d in die entgegengesetzte Richtung, das Einlassventil 7 ist zu, das Auslassventil 9 offen, die Luft verlässt die Arbeitskammer 6 durch dem Auslasskanal 10 und den Ausgang 18 in das Schalldämpfungselement 16 und die weiter in die Umgebungsathmosphäre.

### Fig.4

Die Fig.4. zeigt eine Skizze einer weiteren erfindungsgemäßen Ausführungsform eines Ventilmoduls 14. Der Auslasskanal 10 ist hier oberhalb des Einlasskanals 8 in dem Ventilmodulgehäuse 15 platziert. Dabei umfasst das Ventilmodul 14 einen in dem Ventilmodulgehäuse 15 angeordneten Ventileinsatz 19 und der Einlasskanal 8 ist als eine Ausnehmung in dem Ventileinsatz 19 gestaltet.

Das Elastoelement 11 ist zwischen dem Ventileinsatzes 19 einen Boden des Ventilmodulgehäuses 15 angeordnet und verdrehgesichert eingeklemmt befestigt, so dass eine eindeutige definierte Lage der beiden Ventile 7,9 sichergestellt ist.

Der Ventileinsatz 19 verfügt über eine Prallfläche 21, an welche das Auslassventil 9 beim Öffnen anschlägt beziehungsweise anprallt. Um die dabei entstehenden Geräusche zu reduzieren, ist die Prallfläche 21 verrundet ausgeführt, obwohl auch gerade, geknickte, wellenförmige oder unregelmäßig geformten Prallflächen innerhalb der Erfindung zulässig sind.

Eine Stützfläche 20 dient dem Abstützen des Einlassventils 7 in seiner unbetätigten Ausgangsstellung. Die Stützfläche weist ein oder mehrere Durchlässe zum Einlasskanal auf, welche durch das Einlassventil 7 in seiner Ausgangsstellung verdeckt und abgedichtet sind.

Das Schalldämpfungselement ist als eine Scheibe aus einem Schaumstoffwerkstoff in dem Ventilmodulgehäuse 15 oberhalb des Ventileinsatzes 16 eingesetzt und von einem Moduldeckel 24 abgedeckt und gegen Herausfallen gesichert. Der Ausgang 18 ist hierbei als ein Durchbruch in dem Moduldeckel 24 ausgeführt.

Der Moduldeckel kann dabei mit dem Modulgehäuse verschraubt, verklemmt, verrastet, verklebt, verpresst oder auch andersartig form-oder kraftschlüssig verbunden werden, ohne die Erfindung zu verlassen.

### Fig.5

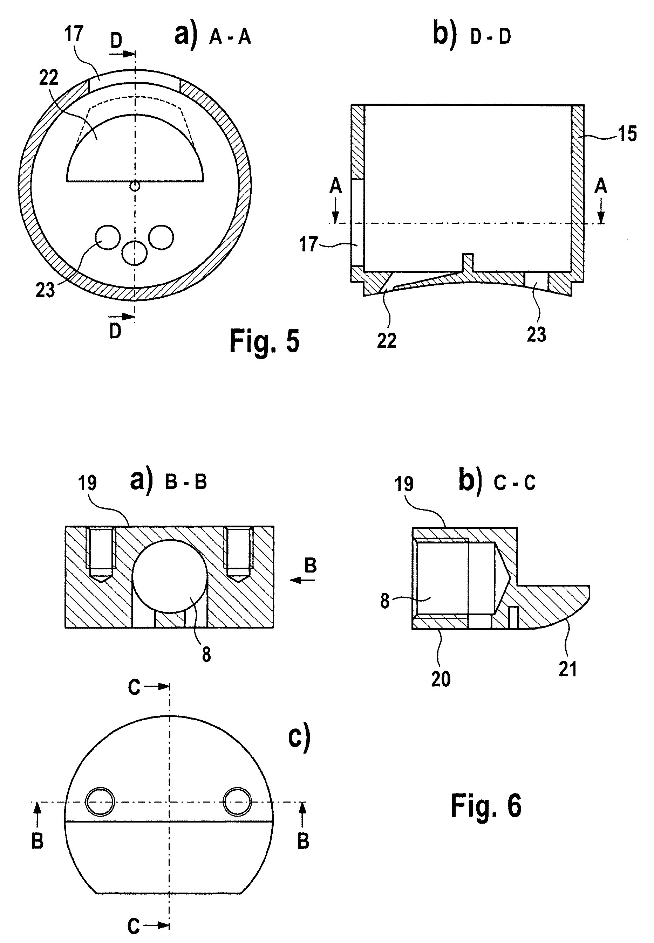

Die Fig.5. zeigt eine Skizze eines Skizze Ventilmodulgehäuses 15 in Drauf (a) und einer seitlichen (b) Schnittdarstellung. Das Ventilmodulgehäuse ist im Wesentlichen zylindrisch topfförmig mit einem Boden und einer Wandung gestaltet, wobei der Boden mehrere Durchbrüche 23, welche dem Auslassventil 9 zugeordnet sind und einen Durchbruch 22, welcher dem Einlassventil 7 zugeordnet ist, aufweist. Der Zugang 17 ist als eine Öffnung in der Wandung des Ventilmodulgehäuses 15 ausgebildet.

Die Anzahl und die Gestaltform der Durchbrüche 22,23 sowie des Zugangs 17 können in weiteren Ausführungsformen variieren ohne die Erfindung zu verlassen.

Ebenso kann das Ventilmodulgehäuses 15 innerhalb der Erfindung einteilig mit dem Arbeitsraumdeckel ausgeführt sein, so dass der Boden des Ventilmodulgehäuses 15 gleichzeitig ein Teil des Arbeitsraumdeckels 4 ist.

### Fig.6

Die Fig.6 zeigt eine weitere Ausführungsform eines Ventileinsatzes 19, welcher dazu geeignet ist, mit dem in der Fig. 5 beschriebenen Ventilmodulgehäuses 15 eingesetzt zu werden. Der Ventileinsatz kann sowohl aus Metall als auch Kunststoff gestaltet werden. In der Draufsicht (Ansicht c) erkennt man eine weitgehend kreisrunde Außenkontur mit einem abgeschnittenen Sektorbereich, welcher nach dem Verbau in dem Ventilgehäuse 15 als ein Luftdurchlass von dem Auslassventil in den Auslasskanal 10 dient.

In der Schnittdarstellungen in den Ansichten a und b ist zu erkennen, dass der Einlasskanal 8 als eine Bohrung mit zwei Querbohrungen in dem Ventileinsatz 19 ausgebildet ist, wobei es sich versteht, dass auch anders ausgebildete Ausnehmungen in dem Ventileinsatz 19 als Einlasskanal 8 innerhalb der Erfindung zulässig sind.

Die Fläche des Ventileinsatzes unterhalb des Einlasskanals 8 dient im Verbauzustand als Stützfläche 20 für das Einlassventil 7

### Fig.7

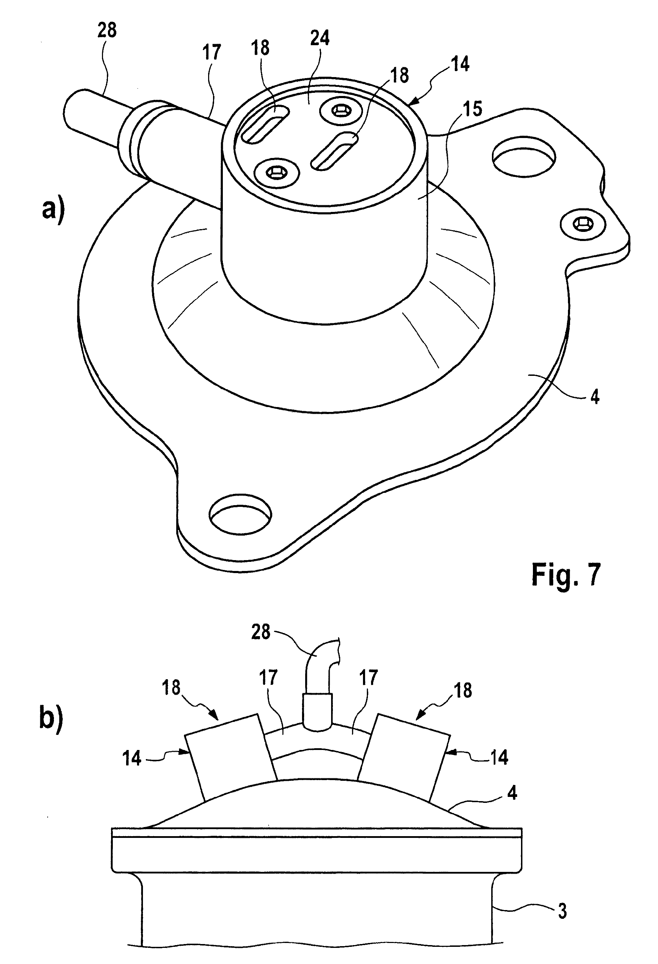

In der Fig.7. ist in der Ansicht a ein erfindungsgemäßes Ventilmodul 14 abgebildet, wobei das Ventilmodulgehäuse 15 einteilig mit dem Arbeitsraumdeckel 4 ausgebildet ist. Zwei Ausgänge 18 für den nicht sichtbaren Auslasskanal 10 sind als längliche Durchbrüche in dem Moduldeckel 24 ausgebildet.

Der Zugang 17 ist als ein an dem Ventilmodulgehäuse 15 angeordneter Stutzen gestaltet, welcher einen klemmbaren Schnellverschluss für die Unterdruckleitung 28 bietet.

Die Ausführungsform nach der Ansicht b verfügt über zwei nebeneinander an dem Arbeitsraumdeckel 4 angeordnete Ventilmodule 14. Die beiden Zugänge 17 münden ineinander und bieten dadurch eine einzelne gemeinsame Anbindungsstelle für die Unterdruckleitung 28.

Weitere Anzahl sowie abweichende Positionen von Ventilmodulen 14 an dem Arbeitsraumdeckel 4 sind innerhalb der Erfindung ebenfalls vorstellbar.

### Fig.8

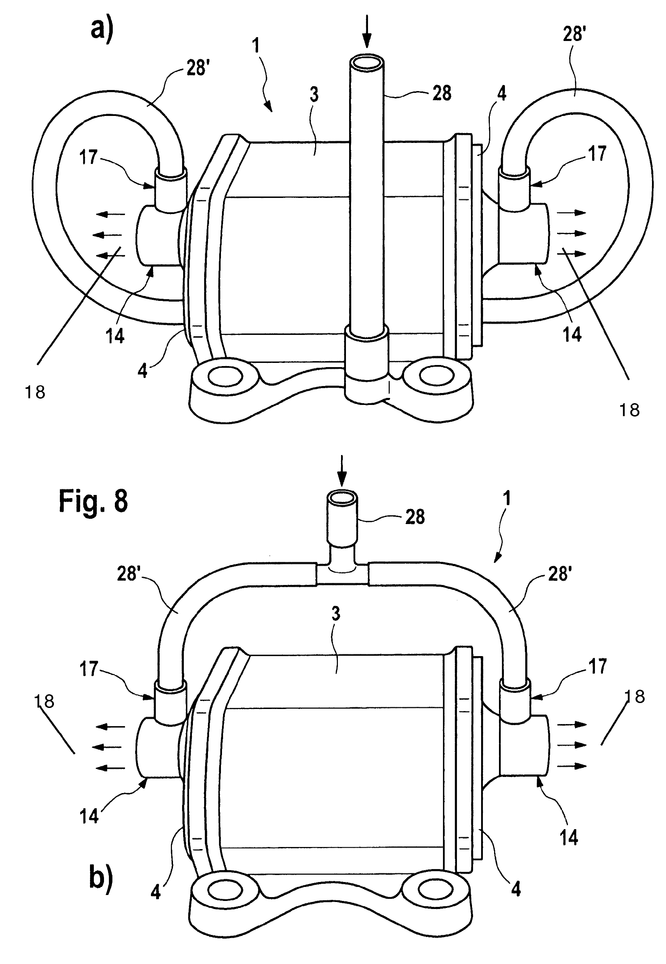

In der Fig.8 sind in den Ansichten a und b sind stark vereinfacht zwei erfindungsgemäße Ausführungsbeispiele eines Pumpenaggregats 1 dargestellt. In beiden Fällen sind zwei Arbeitsraumdeckeln 4 an zwei entgegengesetzten Enden eines Pumpengehäuses 3 angebracht. An jedem Arbeitsraumdeckel 4 ist ein Ventilmodul 14 mit einem radial ausgerichteten Zugang 17 und einem axial ausgerichteten Ausgang 18 angeordnet.

Bei der Ausführungsform in der Ansicht a ist die Unterdruckleitung 28 an eine einzelne Anbindungsstelle direkt am Pumpengehäuse 3 angeschlossen, so dass die Luft zunächst über nicht gezeigte, in das Pumpengehäuse 3 integrierte Kanäle weitergeleitet und dann über weitere, an die besagten integrierten Kanäle angeschlossenen Unterdruckleitungen 28' den beiden Zugängen 17 zugeführt wird.

Es ist innerhalb der Erfindung jedoch ebenso möglich, einen Kanal in den Arbeitsraumdeckel 4 zu integrieren beziehungsweise einzuformen, so dass die Luft aus der Unterdruckleitung 28 von einer Anschlussstelle am Pumpengehäuse über die in das Pumpengehäuse 3 und den Arbeitsraumdeckel 4 integrierte Kanäle direkt den Einlasskanälen 8 der Ventilmodule 14 zugeführt wird. Dadurch kann die Anzahl erforderlicher Anschlüsse und Montageoperationen für Unterdruckleitungen auf ein Minimum reduziert werden.

Bei der Ausführungsform in der Ansicht b dagegen verzweigt sich die Unterdruckleitung 28 vor dem Pumpengehäuse 3 in zwei separate Unterdruckleitungen 28`, welche dann jeweils an die Ventilmodule 14 angeschlossen werden. Dadurch können insbesondere ein besonders einfaches Pumpengehäuse 3 sowie flexible Anschlussmöglichkeiten von Unterdruckleitungen an die Zugänge 17 realisiert werden.

### Fig.9

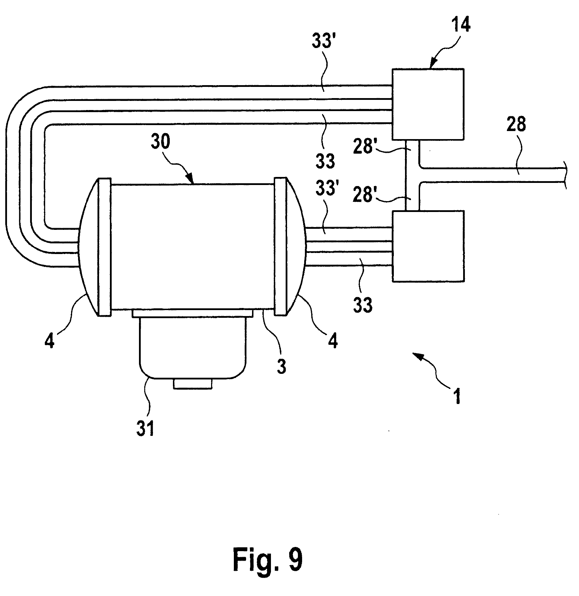

In der Fig.9 ist eine weitere erfindungsgemäße Ausführungsform des Pumpenaggregats 1 schematisch abgebildet. Die Pumpe 30, welche neben dem Pumpengehäuse 3 zwei Arbeitsraumdeckel 4 umfasst ist zusammen mit dem Pumpenantriebsaggregat 31 räumlich getrennt von den beiden Ventilmodulen 14 angeordnet. Die Verbindungskanäle 33,33' führen jeweils von den Arbeitsraumdeckeln 4 zu den nicht gezeigten Einlass- sowie Auslassventilen (7,9) in den Ventilmodulen 14 und gewährleisten eine pneumatische Verbindung zwischen den Ventilen (7,9) und den ebenfalls nicht abgebildeten Arbeitsräumen 6 in der Pumpe 30. Über die Unterdruckleitungen 28 sowie 28' sind die beiden Ventilmodule 14 an einen nicht gezeigten Bremskraftverstärker 2 pneumatisch angeschlossen.

Weitere Ausführungen mit beispielsweise lediglich nur einem einzelnen Ventilmodul und einem einzelnen Arbeitsraum 6 in der Pumpe 30 oder einer Kombination mit einem räumlich gelöst und dem anderen an dem Arbeitsraumdeckel 4 angeordneten Ventilmodulen 14 sind innerhalb der Erfindung ebenso möglich.

### Bezugszeichen:

- 1: Pumpenaggregat
- 2: Bremskraftverstärker
- 3: Pumpengehäuse
- 4: Arbeitsraumdeckel
- 5: Verdrängerelement
- 6: Arbeitsraum
- 7: Einlassventil
- 8: Einlasskanal
- 9: Auslassventil
- 10: Auslasskanal
- 11: Elastoelement
- 12: Flächenbereich des Elastoelements
- 13: Flächenbereich des Elastoelements
- 14: Ventilmodul
- 15: Ventilmodulgehäuse
- 16: Schalldämpfungselement
- 17: Zugang
- 18: Ausgang
- 19: Ventileinsatz
- 20: Stützfläche
- 21: Prallfläche
- 22: Durchbruch
- 23: Durchbruch
- 24: Moduldeckel
- 25: Hauptbremszylinder
- 26: Druckmittelbehälter
- 27: Betätigungsvorrichtung
- 28, 28': Unterdruckleitung
- 29: Unterdruckleitung
- 30: Pumpe
- 31: Pumpenantriebsaggregat
- 32: Schlitz
- 33, 33': Verbindungsleitung

## Patentansprüche

1. Elektromotorisch angetriebenes Pumpenaggregat (1) zur Bereitstellung von Unterdruck für einen pneumatischen Bremskraftverstärker (2) einer Kraftfahrzeugbremsanlage, wobei das Pumpenaggregat (1) ein Pumpengehäuse (3) und wenigstens ein elastisches Verdrängerelement (5) zum Verdrängen eines Arbeitsmediums aufweist, wobei das Pumpengehäuse (3) mit wenigstens einem Arbeitsraumdeckel (4) versschlossen ist so dass zwischen dem Verdrängerelement (5) und dem Arbeitsraumdeckel (4) ein Arbeitsraum (6) begrenzt ist, wobei dem Arbeitsraum (6) jeweils wenigstens ein Einlassventil (7) mit einem Einlasskanal (8) und wenigstens ein Auslassventil (9) mit einem Auslasskanal (10) zugeordnet sind, wobei die Ventile (7,9) jeweils aus einer geschlossenen unbetätigten Ausgangsstellung automatisch druckdifferenzgesteuert in eine geöffnete Betätigungsstellung versetzbar sind, **dadurch gekennzeichnet, dass** das Einlassventil (7) und das Auslassventil (9) durch ein einstückiges Elastoelement (11) ausgebildet sind.

2. Pumpenaggregat nach Anspruch 1, **dadurch gekennzeichnet, dass** das Elastoelement (11) als ein elastisches Plättchen ausgebildet ist.

3. Pumpenaggregat nach Anspruch 2, **dadurch gekennzeichnet, dass** das Elastoelement (11) einen ersten Flächenbereich (12) und einen zweiten Flächenbereich (13) aufweist, wobei der erste Flächenbereich (12) dem Einlassventil (7) und der zweite Flächenbereich (13) dem Auslassventil (9) zugeordnet ist und wobei die Flächenbereiche (12,13) miteinander verbunden sowie ineinander übergehend gestaltet sind.

4. Pumpenaggregat nach Anspruch 1, **dadurch gekennzeichnet, dass** das Elastoelement (11) in einem Ventilmodul (14) angeordnet ist, wobei das Ventilmodul (14) ein Ventilmodulgehäuse (15), den Einlasskanal (8), den Auslasskanal (10) und wenigstens ein Schalldämpfungselement (16) umfasst.

5. Pumpenaggregat nach Anspruch 4, **dadurch gekennzeichnet, dass** das Ventilmodul (14) an dem Arbeitsraumdeckel (4) angeordnet ist.

6. Pumpenaggregat nach Anspruch 4, **dadurch gekennzeichnet, dass** das Ventilmodul (14) turmartig gestaltet ist, so dass der Einlasskanal (8) und der Auslasskanal (9) im Wesentlichen übereinander gestaffelt in dem Ventilmodulgehäuse (15) angeordnet sind.

7. Pumpenaggregat nach einem der Ansprüche 4 bis 6, **dadurch gekennzeichnet, dass** das Ventilmodul (14) wenigstens einen radial ausgerichteten Zugang (17) für den Einlasskanal (8) sowie wenigstens einen axial ausgerichteten Ausgang (18) für den Auslasskanal (9) aufweist.

8. Pumpenaggregat nach einem der Ansprüche 4 bis 6, **dadurch gekennzeichnet, dass** das Ventilmodul (14) wenigstens einen axial ausgerichteten Zugang (17) für den Einlasskanal (8) sowie wenigstens einen radial ausgerichtete Ausgang (18) für den Auslasskanal (9) aufweist.

9. Pumpenaggregat nach Anspruch 4, **dadurch gekennzeichnet, dass** das Schalldämpfungselement (16) aus einem Schaumstoffwekstoff ausgebildet und als ein Einlegeteil in dem Ventilmodulgehäuse (15) angeordnet ist.

10. Pumpenaggregat nach Anspruch 4, **dadurch gekennzeichnet, dass** das Schalldämpfungselement (16) im Wesentlichen Ringförmig aus einem Schaumstoffwekstoff ausgebildet und radial außen umfassend an dem Ventilmodulgehäuse (15) angeordnet ist.

11. Pumpenaggregat nach einem der Ansprüche 4 bis 10, **dadurch gekennzeichnet, dass** das Ventilmodul (14) einen Ventileinsatz (19) umfasst, wobei der Ventileinsatz (19) eine Stützfläche (20) zum Abstützen des Einlassventils (7) in seiner unbetätigten Ausgangsstellung und eine Prallfläche (21) zum Abstützen von dem Auslassventil (9) in seinem geöffneten Betätigungszustand aufweist.

12. Pumpenaggregat nach Anspruch 11 **dadurch gekennzeichnet, dass** der Ventileinsatz (19) als ein Einlegeteil in dem Ventilmodulgehäuse (15) angeordnet ist.

13. Pumpenaggregat nach Anspruch 11 oder 12, **dadurch gekennzeichnet, dass** der Einlasskanal (8) in dem Ventileinsatz (19) angeordnet ist.

14. Pumpenaggregat nach Anspruch 4, **dadurch gekennzeichnet, dass** das Ventilmodul (14) weitgehend zylindrisch rund ausgebildet ist.

15. Pumpenaggregat nach Anspruch 5, **dadurch gekennzeichnet, dass** das Ventilmodul (14) annähernd mittig zentral an dem Arbeitsraumdeckel (4) angeordnet vorgesehen ist.

16. Pumpenaggregat nach Anspruch 5, **dadurch gekennzeichnet, dass** das wenigstens zwei Ventilmodule (14) an dem Arbeitsraumdeckel (4) nebeneinander angeordnet vorgesehen sind.

17. Pumpenaggregat nach Anspruch 5, **dadurch gekennzeichnet, dass** das Ventilmodulgehäuse (15) einstückig mit dem Arbeitsraumdeckel ausgebildet ist.

18. Pumpenaggregat nach Anspruch 4, **dadurch gekennzeichnet, dass** das Ventilmodulgehäuse (15) wenigstens zwei Durchbrüche (22,23) zum Arbeitsraum (6) aufweist, wobei wenigstens ein Durchbruch (22) dem Einlassventil (7) und wenigstens ein Durchbruch (23) dem Auslassventil (9) zugeordnet sind.

19. Pumpenaggregat nach Ansprüchen 4 und 7, **dadurch gekennzeichnet, dass** das Ventilmodul (14) einen Moduldeckel (24) aufweist, wobei wenigstens ein Ausgang (18) für den Auslasskanal (9) in dem Moduldeckel (24) angeordnet ist.

20. Pumpenaggregat nach Anspruch 4, **dadurch gekennzeichnet, dass** das Ventilmodul (14) räumlich gelöst von dem Arbeitsraumdeckel 4 und dem Pumpengehäuse (3) angeordnet sowie durch Leitungen und oder Kanäle (33,33`) pneumatisch mit dem Arbeitsraum (6) verbunden ist.

## Claims

1. Pump unit (1) driven by an electric motor for providing a vacuum for a pneumatic brake booster (2) of a motor vehicle brake system, wherein the pump unit (1) has a pump housing (3) and at least one elastic displacer element (5) for displacing a working medium, wherein the pump housing (3) is closed off by at least one working space cover (4), with the result that a working space (6) is delimited between the displacer element (5) and the working space cover (4), wherein at least one inlet valve (7) with an inlet channel (8) and at least one outlet valve (9) with an outlet channel (10) are associated with the working space (6), and wherein the valves (7, 9) can each be shifted automatically by means of pressure difference from a closed unactuated starting position into an open actuation position, **characterized in that** the inlet valve (7) and the outlet valve (9) are formed by a one-piece elastic element (11).

2. Pump unit according to Claim 1, **characterized in that** the elastic element (11) is designed as a small elastic plate.

3. Pump unit according to Claim 2, **characterized in that** the elastic element (11) has a first surface area (12) and a second surface area (13), wherein the first surface area (12) is associated with the inlet valve (7) and the second surface area is associated with the outlet valve (9) and wherein the surface areas (12, 13) are interconnected and designed to merge into one another.

4. Pump unit according to Claim 1, **characterized in that** the elastic element (11) is arranged in a valve module (14), wherein the valve module (14) comprises a valve module housing (15), the inlet channel (8), the outlet channel (10) and at least one muffler element (16).

5. Pump unit according to Claim 4, **characterized in that** the valve module (14) is arranged on the working space cover (4).

6. Pump unit according to Claim 4, **characterized in that** the valve module (14) is of tower-like design, with the result that the inlet channel (8) and the outlet channel (9) are arranged one above the other in a substantially staggered manner in the valve module housing (15).

7. Pump unit according to one of Claims 4 to 6, **characterized in that** the valve module (14) has at least one radially aligned entry (17) for the inlet channel (8) and at least one axially aligned exit (18) for the outlet channel (9).

8. Pump unit according to one of Claims 4 to 6, **characterized in that** the valve module (14) has at least one axially aligned entry (17) for the inlet channel (8) and at least one radially aligned exit (18) for the outlet channel (9).

9. Pump unit according to Claim 4, **characterized in that** the muffler element (16) is formed from a foam material and is arranged as a fitting in the valve module housing (15).

10. Pump unit according to Claim 4, **characterized in that** the muffler element (16) is formed substantially in a ring shape from a foam material and is arranged on the valve module housing (15) so as to enfold it radially on the outside.

11. Pump unit according to one of Claims 4 to 10, **characterized in that** the valve module (14) comprises a valve insert (19), wherein the valve insert (19) has a supporting surface (20) for supporting the inlet valve (7) in the unactuated starting position thereof and an impact surface (21) for supporting the outlet valve (9) in the opened state of actuation thereof.

12. Pump unit according to Claim 11, **characterized in that** the valve insert (19) is arranged as a fitting in the valve module housing (15).

13. Pump unit according to Claim 11 or 12, **characterized in that** the inlet channel (8) is arranged in the valve insert (19).

14. Pump unit according to Claim 4, **characterized in that** the valve module (14) is of largely circular-cylindrical design.

15. Pump unit according to Claim 5, **characterized in that** the valve module (14) is provided approximately in the center, being arranged centrally on the working space cover (4).

16. Pump unit according to Claim 5, **characterized in that** the at least two valve modules (14) are provided in a manner arranged adjacent to one another on the working space cover (4).

17. Pump unit according to Claim 5, **characterized in that** the valve module housing (15) is formed in one piece with the working space cover.

18. Pump unit according to Claim 4, **characterized in that** the valve module housing (15) has at least two apertures (22, 23) leading to the working space (6), wherein at least one aperture (22) is associated with the inlet valve (7) and at least one aperture (23) is associated with the outlet valve (9).

19. Pump unit according to Claims 4 and 7, **characterized in that** the valve module (14) has a module cover (24), wherein at least one exit (18) for the outlet channel (9) is arranged in the module cover (24).

20. Pump unit according to Claim 4, **characterized in that** the valve module (14) is arranged spatially separate from the working space cover 4 and the pump housing (3) and is connected pneumatically to the working space (6) by lines and/or channels (33, 33').

## Revendications

1. Ensemble de pompe (1) entraîné par moteur électrique et servant à établir une dépression pour un amplificateur pneumatique (2) de force de freinage d'une installation de freinage de véhicule automobile,
l'ensemble de pompe (1) présentant un boîtier de pompe (3) et au moins un élément élastique de refoulement (5) qui refoule un fluide de travail,
le boîtier de pompe (3) étant fermé par au moins un couvercle (4) d'espace de travail de telle sorte qu'un espace de travail (6) soit délimité entre l'élément de refoulement (5) et le couvercle (4) de l'espace de travail,
au moins une soupape d'admission (7) dotée d'un canal d'admission (8) et au moins une soupape d'échappement (9) dotée d'un canal d'échappement (10) étant associées à l'espace de travail (6), les soupapes (7, 9) pouvant être toutes deux amenées automatiquement, sous la commande d'une différence de pression, dans une position ouverte d'actionnement partant d'une position initiale fermée non actionnée, **caractérisé en ce que**
la soupape d'admission (7) et la soupape d'échappement (9) sont formées d'un seul tenant sous la forme d'un élément élastomère (11).

2. Ensemble de pompe selon la revendication 1, **caractérisé en ce que** l'élément élastomère (11) est configuré comme plaquette élastique.

3. Ensemble de pompe selon la revendication 2, **caractérisé en ce que** l'élément élastomère (11) présente une première partie de surface (12) et une deuxième partie de surface (13), la première partie de surface (12) étant associée à la soupape d'admission (7) et la deuxième partie de surface (13) à la soupape d'échappement (9), les parties de surface (12, 13) étant reliées l'une à l'autre et configurées en prolongement mutuel.

4. Ensemble de pompe selon la revendication 1, **caractérisé en ce que** l'élément élastomère (11) est disposé dans un module de soupape (14), le module de soupape (14) comportant un boîtier (15) de module de soupape, le canal d'admission (8), le canal d'échappement (10) et au moins un élément (16) d'atténuation du bruit.

5. Ensemble de pompe selon la revendication 4, **caractérisé en ce que** le module de soupape (14) est disposé sur le couvercle (4) de l'espace de travail.

6. Ensemble de pompe selon la revendication 4, **caractérisé en ce que** le module de soupape (14) est configuré en forme de tour de telle sorte que le canal d'admission (8) et le canal d'échappement (9) soient disposés essentiellement en superposition mutuelle dans le boîtier (15) du module de soupape.

7. Ensemble de pompe selon l'une des revendications 4 à 6, **caractérisé en ce que** le module de soupape (14) présente au moins un accès (17) orienté radialement pour le canal d'admission (8) ainsi qu'au moins une sortie (18) orientée axialement pour le canal d'échappement (9).

8. Ensemble de pompe selon l'une des revendications 4 à 6, **caractérisé en ce que** le module de soupape (14) présente au moins un accès (17) orienté axialement pour le canal d'admission (8) et au moins une sortie (18) alignée radialement pour le canal d'échappement (9).

9. Ensemble de pompe selon la revendication 4, **caractérisé en ce que** l'élément (16) d'atténuation du bruit est formé d'un matériau en mousse et est disposé comme pièce d'insertion dans le boîtier (15) du module de soupape.

10. Ensemble de pompe selon la revendication 4, **caractérisé en ce que** l'élément (16) d'atténuation du bruit a une forme essentiellement annulaire et est réalisé en un matériau en mousse et est disposé radialement à l'extérieur autour du boîtier (15) du module de soupape.

11. Ensemble de pompe selon l'une des revendications 4 à 10, **caractérisé en ce que** le module de soupape (14) comporte une garniture (19) de soupape, la garniture (19) de soupape présentant une surface d'appui (20) qui soutient la soupape d'admission (7) dans sa position initiale non actionnée et une surface de percussion (21) qui soutient la soupape d'échappement (9) dans sa position ouverte d'actionnement.

12. Ensemble de pompe selon la revendication 11, **caractérisé en ce que** la garniture de soupape (19) configurée comme pièce d'insertion est disposée dans le boîtier (15) de module de soupape.

13. Ensemble de pompe selon la revendication 11 ou 12, **caractérisé en ce que** le canal d'admission (8) est disposé dans la garniture de soupape (19).

14. Ensemble de pompe selon la revendication 4, **caractérisé en ce que** le module de soupape (14) a une forme arrondie largement cylindrique.

15. Ensemble de pompe selon la revendication 5, **caractérisé en ce que** le module de soupape (14) est disposé approximativement au centre du couvercle (4) de l'espace de travail.

16. Ensemble de pompe selon la revendication 5, **caractérisé en ce que** les deux ou plusieurs modules de soupape (14) sont disposés l'un à côté de l'autre sur le couvercle (4) de l'espace de travail.

17. Ensemble de pompe selon la revendication 5, **caractérisé en ce que** le boîtier (15) de module de soupape est formé d'un seul tenant avec le couvercle de l'espace de travail.

18. Ensemble de pompe selon la revendication 4, **caractérisé en ce que** le boîtier (15) du module de soupape présente au moins deux perforations (22, 23) s'ouvrant sur l'espace de travail (6), au moins une perforation (22) étant associée à la soupape d'admission (7) et au moins une perforation (23) à la soupape d'échappement (9).

19. Ensemble de pompe selon les revendications 4 et 7, **caractérisé en ce que** le module de soupape (14) présente un couvercle de module (24), au moins une sortie (18) du canal d'échappement (9) étant disposée dans le couvercle (24) du module.

20. Ensemble de pompe selon la revendication 4, **caractérisé en ce que** le module de soupape (14) est disposé séparément du couvercle (4) de l'espace de travail et du boîtier de pompe (3) et est relié pneumatiquement à l'espace de travail (6) par des conduits ou des canaux (33, 33').
